# EUROPÄISCHE PATENTSCHRIFT

(11) **EP 2 457 693 B1**
(45) Veröffentlichungstag und Bekanntmachung des Hinweises auf die Patenterteilung: **30.05.2018**
(21) Anmeldenummer: 11182443.9
(22) Anmeldetag: 23.09.2011
(51) Int. Cl.: B25B 21/00, B25B 23/00, B25B 23/147, B23P 19/06

(54) **Schrauber mit sensorgesteuerter Abschaltung**
Screwdriver with sensor-activated deactivation
Visseuse dotée d'un arrêt commandé par capteur

(30) Priorität: 26.11.2010 DE 102010053314
(43) Veröffentlichungstag der Anmeldung: 30.05.2012
(73) Patentinhaber: C. & E. Fein GmbH, 73529 Schwäbisch Gmünd-Bargau (DE)
(72) Erfinder: Mayer, Bernd, 73479 Ellwangen (DE); Vogt, Adrian, 73525 Schwäbisch Gmünd (DE); Woecht, Norbert, 73560 Böbingen an der Rems (DE); Bek, Fabian, 73560 Böbingen (DE)

(56) Entgegenhaltungen:
- EP-A2- 1 941 973
- US-B1- 6 536 536

## Beschreibung

Die Erfindung betrifft einen Schrauber mit einem Antriebsrad, das mittels eines Antriebs antreibbar ist, mit einer Werkzeugspindel mit einer Werkzeugaufnahme für ein Schraubwerkzeug, wobei die Werkzeugspindel mit dem Antriebsrad über eine Koppeleinrichtung gekoppelt ist, die bei der Übertragung eines Drehmoments auf die Werkzeugspindel eine axiale Kraftkomponente erzeugt, mit einem Sensor zur Überwachung der Werkzeugspindel, und mit einer Steuerung zur Steuerung des Antriebs in Abhängigkeit von einem Ausgangssignal des Sensors, wobei die Werkzeugspindel mit dem Antriebsrad über eine Koppeleinrichtung gekoppelt ist, die bei der Übertragung eines Drehmoments auf die Werkzeugspindel eine axiale Kraftkomponente erzeugt, mit einem Sensor zur Überwachung der Werkzeugspindel, und mit einer Steuerung zur Steuerung des Antriebs in Abhängigkeit von einem Ausgangssignal des Sensors.

Mit einem derartigen Schrauber kann das Anlaufen des Schraubers von einem bestimmten axialen Anpressdruck des Benutzers abhängig gemacht werden.

Ein weiterer Schrauber ähnlicher Art ist aus der EP 1 941 973 A2 bekannt. Hierbei ist ein Schrauber mit einem Tiefenanschlag zur Begrenzung der Einschraubtiefe und mit einer axial beweglichen Abtriebswelle versehen, an der eine Werkzeugaufnahme für ein Schraubwerkzeug vorgesehen ist. Die Abtriebswelle ist zwischen einer vorderen, inaktiven Stellung und einer hinteren, aktiven Stellung axial bewegbar gelagert und ist durch eine Federkraft in ihre vordere Stellung hin beaufschlagt. Ein Sensor überwacht die Axialstellung der Abtriebswelle und schaltet in der hinteren Stellung der Abtriebswelle in einen Einschaltzustand, in der der Antriebsmotor betätigt werden kann und verhindert in der vorderen Stellung der Abtriebswelle in einem Ausschaltzustand die Betätigung des Antriebsmotors.

Der bekannte Schrauber benötigt eine relativ große Axialbewegung der Abtriebswelle, um mittels des Hall-Sensors zwischen Einschaltzustand und Ausschaltzustand umschalten zu können. Auch hängt die Genauigkeit der Einschraubtiefe im Betrieb von der Kennlinie des Sensors und damit von dessen Genauigkeit ab.

Aus der EP 1 941 973 A2 ist ferner ein Schrauber mit Tiefenanschlag bekannt, der über eine Axialverschiebung seiner Abtriebswelle abgeschaltet wird.

Vor diesem Hintergrund liegt die Aufgabe der Erfindung darin, einen Schrauber mit einer sensorgesteuerten Abschaltmöglichkeit anzugeben, der möglichst unabhängig von einer Axialbewegung der Abtriebswelle bei einem Abschaltvorgang verwendbar ist und bei dem eine einfache Steuermöglichkeit zur kurzfristigen Erhöhung der Nennleistung des Schraubers besteht.

Diese Aufgabe wird bei einem Schrauber gemäß der eingangs beschriebenen Art dadurch gelöst, die Leistung des Antriebs für einen kurzen Zeitraum gegenüber der Nennleistung erhöht wird, wenn die Anpresskraft der Werkzeugspindel oberhalb eines bestimmten Maximafschwellwertes liegt.

Die Aufgabe der Erfindung wird auf diese Weise gelöst. Erfindungsgemäß kann dadurch, dass der Sensor als Kraftsensor ausgebildet ist, eine präzise Überwachung der Werkzeugspindel durchgeführt werden, um die Steuerung bei Erreichen eines bestimmten Kriteriums in einen Ausschaltzustand zu überführen. Dies ist grundsätzlich von einer Axialbewegung der Werkzeugspindel unabhängig und kann sowohl in Verbindung mit einem Tiefenanschlag aber auch ohne die Verwendung eines Tiefenanschlages genutzt werden. So ist es möglich, etwa bei Erreichen einer vorbestimmten Anzugskraft den Antrieb abzuschalten. Andererseits kann dann, wenn ein Tiefenanschlag verwendet wird, bei Ansprechen des Tiefenanschlags und einem damit verbundenen Abfall der Anpresskraft eine Abschaltung des Antriebs eingeleitet werden.

Wenn die Anpresskraft der Werkzeugspindel oberhalb eines bestimmten Maximalschwellwertes liegt, wird erfindungsgemäß die Leistung des Antriebs für einen kurzen Zeitraum gegenüber der Nennleistung erhöht.

Auf diese Weise kann eine kurzzeitige Boost-Funktion des Antriebsmotors genutzt werden, um eine höhere Antriebsleistung aufzubringen. Die Steuerung kann hierbei intuitiv über eine entsprechend erhöhte Anpresskraft des Schraubers auf die Verschraubung erfolgen.

In bevorzugter Weiterbildung der Erfindung ist die Werkzeugspindel mit dem Antriebsrad über eine Koppeleinrichtung gekoppelt, die bei der Übertragung eines Drehmomentes auf die Werkzeugspindel eine axiale Kraftkomponente erzeugt.

Diese Maßnahme ermöglicht es, einen vollständigen Anzug einer Verschraubung auch nach Abschaltung zu gewährleisten, da die Koppeleinrichtung einen entsprechenden Axialweg machen kann, nachdem eine Abschaltung erfolgt ist.

In weiter vorteilhafter Ausgestaltung der Erfindung ist die Koppeleinrichtung derart ausgebildet, dass bei Antrieb der Werkzeugspindel im Rechtslauf eine axiale Kraftkomponente nach außen in Richtung der Werkzeugaufnahme erzeugt wird.

Eine derartige Ausgestaltung ist vorteilhaft, wenn der Schrauber üblicherweise zum Anzug von Rechtsgewinden verwendet wird. Sollte der Schrauber jedoch überwiegend zum Anzug von Linksgewinden verwendet werden, so ist es vorteilhaft, die Koppeleinrichtung derart auszubilden, dass die axiale Kraftkomponente nach außen bei Antrieb im Linkslauf erzeugt wird.

Gemäß einer weiteren Ausgestaltung der Erfindung ist der Sensor derart mit der Steuerung gekoppelt, dass sich dann, wenn die Anpresskraft auf die Werkzeugspindel oberhalb eines bestimmten Anlaufschwellwertes liegt, ein Einschaltzustand ergibt, in dem ein Motor zur Betätigung des Antriebs aktivierbar ist.

Durch diese Maßnahme ergibt sich der Vorteil, dass immer eine gewisse Anpresskraft erforderlich ist, um einen Einschaltzustand zu erlauben, in dem eine Betätigung des Motors ermöglicht ist.

Auf diese Weise wird gewährleistet, dass die Anpresskraft ausreichend hoch ist, um ein Durchrutschen des Schraubwerkzeuges an einer anzuziehenden Verschraubung zu vermeiden. Hierbei kann die Anordnung so getroffen sein, dass der Motor dann, wenn der Anlaufschwellwert erreicht wird, die Anpresskraft also ein gewisses Mindestmaß hat, automatisch in Betrieb gesetzt wird.

Bei einer alternativen Ausführung der Erfindung ist der Motor derart mit der Steuerung gekoppelt, dass der Motor anläuft, wenn die Anpresskraft auf die Werkzeugspindel oberhalb eines bestimmten Anlaufschwellwertes liegt und ein Motorschalter betätigt wird.

Bei dieser Ausführung wird also die Betätigung eines Motorschalters einerseits vorausgesetzt und andererseits muss die Anpresskraft ausreichend hoch sein, um eine Aktivierung des Motors zu erreichen. Auf diese Weise kann eine genaue Kontrolle des Antriebs gewährleistet werden und das Anlaufverhalten des Motors an verschiedene Bedingungen angepasst werden.

Gemäß einer weiteren Ausgestaltung der Erfindung ist die Leistung des Antriebs, insbesondere die Drehzahl oder das Drehmoment, in Abhängigkeit von der Anpresskraft der Werkzeugspindel gesteuert.

Durch diese Maßnahme lässt sich eine vorteilhafte Anpassung der Anpresskraft an die notwendige Leistung zum Anziehen der Verschraubung ermöglichen. Ist ein hohes Anzugsmoment der Verschraubung gefordert, so kann dies über eine entsprechend hohe Anpresskraft gesteuert werden, um ein höheres Drehmoment oder eine höhere Drehzahl aufzubringen.

Wie bereits erwähnt, kann der erfindungsgemäße Schrauber in Verbindung mit einem Tiefenanschlag verwendet werden, der vorzugsweise verstellbar ist.

So lässt sich der Schrauber auf verschiedene Anzugswege von verschiedenen Verschraubungen einstellen. Alternativ kann der Schrauber jedoch auch ohne Tiefenanschlag verwendet werden, etwa wenn es nur um ein bestimmtes Anzugsmoment für eine Verschraubung geht. Hiermit könnte die Drehmoment-Sollwertvorgabe über die Anpresskraft des Bedieners bei Abschaltung des Motors genutzt werden.

Gemäß einer weiteren Ausgestaltung der Erfindung weist die Koppeleinrichtung am Antriebsrad schräg zur Axialrichtung verlaufende Taschen auf, in die Eingriffsmittel eingreifen, die mit der Werkzeugspindel drehfest verbunden sind.

Auf diese Weise lässt sich die axiale Kraftkomponente, die von der Koppeleinrichtung im Falle einer Drehmomentübertragung aufgebracht werden soll, in einfacher Weise erzielen. Je größer die Neigung der Taschen gegenüber der Axialrichtung ist, umso größer wird die übertragene Kraftkomponente in Axialrichtung. Auf diese Weise kann die axiale Kraftkomponente in geeigneter Weise durch die Neigung der Taschen angepasst werden.

Vorzugsweise sind in den Taschen Kugellager aufgenommen, in de-nen ein Querstift gehalten ist, der die Werkzeugspindel durchsetzt.

Auf diese Weise ergeben sich ein praktisch verschleißfreier Aufbau der Koppeleinrichtung und eine zuverlässige Drehmomentübertragung auf die Werkzeugspindel.

Gemäß einer weiteren Ausgestaltung der Erfindung ist am Antriebs-rad eine Schrägverzahnung vorgesehen, die mittels eines entsprechend verzahnten Zahnrades des Antriebs antreibbar ist.

Hierbei ist die Schrägverzahnung vorzugsweise derart ausgebildet, dass bei Antrieb des Antriebsrades im Rechtslauf eine axiale Kraftkomponente in Richtung auf die Werkzeugspindel erzeugt wird.

Durch diese Maßnahmen wird gewährleistet, dass beim üblichen Anziehen von Verschraubungen mit Rechtsgewinde eine entsprechende Vorspannkraft vom Benutzer auf den Schrauber ausgeübt werden muss, um die durch die Schrägverzahnung und die Koppeleinrichtung übertragenen axialen Kraftkomponenten zu überwinden.

In weiter vorteilhafter Ausgestaltung der Erfindung ist die Werkzeugspindel mittels der Koppeleinrichtung gegenüber dem Antriebsrad axial beweg-fich aufgenommen.

Diese Maßnahme hat den Vorteil, dass die Verschraubung auch nach Abschalten des Schraubers infolge der Trägheit von Motor, Getriebe, Antriebsrad und Werkzeugspindel) sich noch um einen gewissen Betrag weiter drehen kann, um die Verschraubung vollständig anzuziehen, beispielsweise um eine Holzschraube bis in die Oberfläche des Werkstücks zu versenken.

In weiter vorteilhafter Ausgestaltung der Erfindung weist das Antriebsrad eine Wirkfläche auf, die vorzugsweise über ein elastisches Element auf den Sensor wirkt.

Auf diese Weise kann die auf das Antriebsrad wirkende Reaktionskraft unmittelbar auf den Sensor übertragen werden.

Der Sensor ist hierbei vorzugsweise als Flächensensor, insbesondere als Foliensensor, ausgebildet.

So ergibt sich ein einfacher und kostengünstiger Aufbau.

Das elastische Element, über den das Antriebsrad auf den Sensor wirkt, ist vorzugsweise als Gummischeibe ausgebildet.

Auf diese Weise kann das elastische Element einerseits zur gleichmäßigen Kraftverteilung auf den Sensor genutzt werden und andererseits zur Abdichtung des fettgefüllten Getriebegehäuses gegen das Motorgehäuse.

Gemäß einer weiteren Ausgestaltung der Erfindung ist die Werkzeugspindel durch eine Feder in Richtung nach außen vorgespannt.

Auf diese Weise lässt sich mit Hilfe der Federspannung eine serientaugliche Einstellung der Schaltschwellen des Sensors gewährleisten, selbst wenn die Kennlinie des Kraftsensors von Fall zu Fall variieren sollte.

Es versteht sich, dass die vorstehend genannten und die nachste-hend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung eines bevorzugten Ausführungsbeispiels unter Bezug-nahme auf die Zeichnung. Es zeigen:
- Fig. 1: eine Seitenansicht eines erfindungsgemäßen Schraubers;
- Fig. 2: einen Längsschnitt durch einen erfindungsgemäßen Schrauber in seinem vorderen Bereich in einer Ausschaltstellung;
- Fig. 3: einen Längsschnitt durch den Schrauber gemäß Fig. 2, jedoch in ei-ner angetriebenen Stellung, in der eine Verschraubung angezogen wird;
- Fig. 4: eine perspektivische Ansicht des Antriebsrades nebst Werkzeugspin-del und Koppeleinrichtung und
- Fig. 5: ein Schaltbild des erfindungsgemäßen Schraubers in vereinfachter Darstellung.

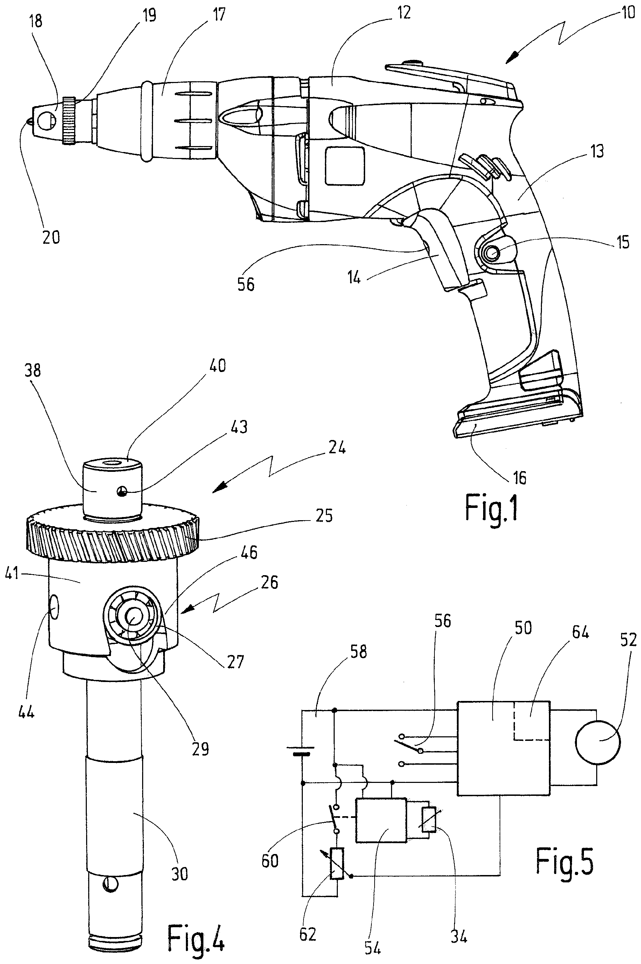

Ein erfindungsgemäßer Schrauber ist in Fig. 1 dargestellt und insgesamt mit der Ziffer 10 bezeichnet. Der Schrauber 10 ist in Pistolenform aufgebaut, mit einem Gehäuse 12, an dem ein Pistalenhandgriff 13 vorgesehen ist. Am vorderen Ende des Gehäuses 12 ist ein Tiefenanschlag 18 mittels eines Einstellrings 19 verstellbar an einer Hülse 17 gehalten und kann durch Abziehen der Hülse 17 vom Gehäuse 12 vom Schrauber entfernt werden. Am äußeren Ende ist ein Schraubwerkzeug 20 in Form eines Bits gehalten, dessen vordere Spitze gemäß Fig. 1 aus dem Tiefenanschlag 18 hervorsteht.

Am unteren Ende des Pistolenhandgriffs 13 befindet sich eine Aufnahme 16 für einen Akkumulator (nicht dargestellt). Am Pistolenhandgriff 13 ist ferner eine Schalttaste 14 aufgenommen, über die ein Motorschalter betätigt werden kann und die Drehzahl bei stärkerem Niederdrücken erhöht werden kann, wie nachfolgend noch anhand von Fig. 5 näher erläutert wird. Am Pistolenhandgriff 13 ist ferner eine Arretierung 15 in Form eines verriegelbaren Knopfes vorgesehen, wodurch die Schalttaste 14 in Vollgasstellung arretiert werden kann.

Der Schrauber 10 kann grundsätzlich mit und ohne Tiefenanschlag 18 verwendet werden und kann auch mit einem Magazin betrieben werden, an dem Schrauben aufgenommen sind, um in bekannter Weise nacheinander eine hohe Anzahl von Schrauben eindrehen zu können, etwa wie bei einem Bauschrauber üblich.

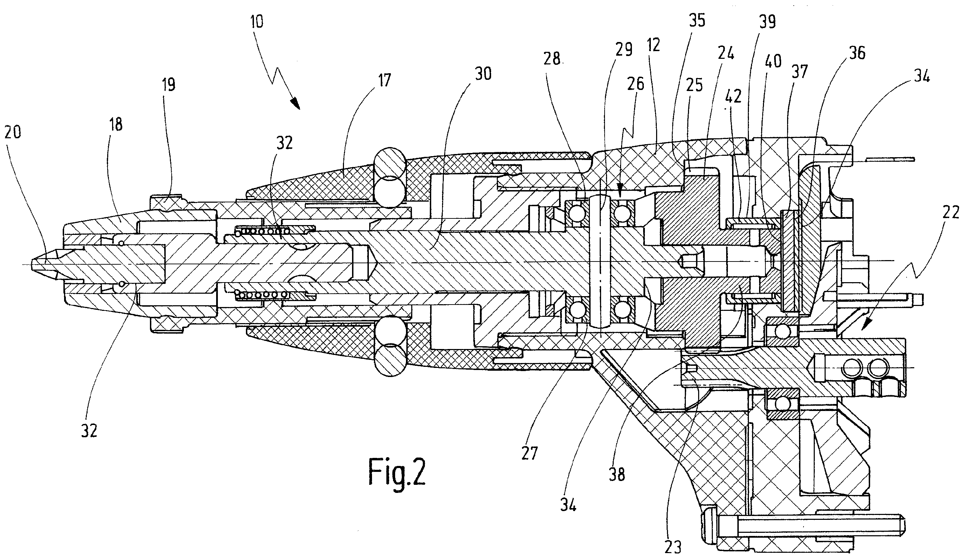

Der Aufbau des Schraubers 10 wird nachfolgend anhand der Fig. 2 bis 4 näher erläutert.

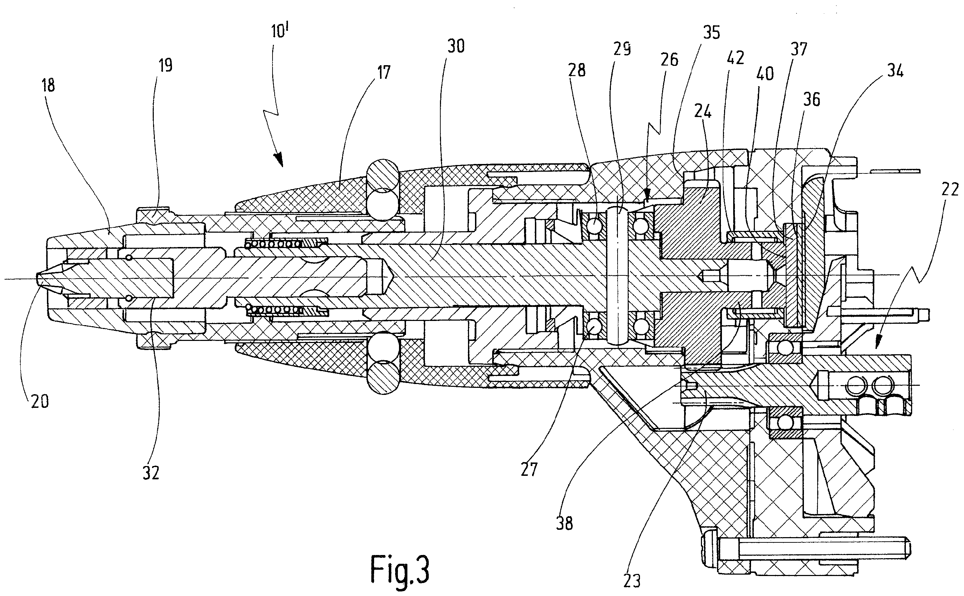

In Fig. 2 ist der Schrauber in seinem vorderen Bereich im Längs-schnitt dargestellt. Innerhalb des Gehäuses 12 ist eine Werkzeugspindel 30 drehbar und um einen gewissen Betrag axial verschiebbar gelagert, an deren äußerem Ende eine Werkzeugaufnahme 32 zur Befestigung eines Werkzeugs 20, hier in Form eines Bits, vorgesehen ist. Die Werkzeugspindel 30 ist über eine Koppeleinrichtung 26 mit einem Antriebsrad 24 gekoppelt, das an seinem Außenumfang eine Schrägverzah-nung 25 aufweist (vgl. Fig. 4). Das Antriebsrad ist mit einem der Werkzeugspindel 30 abgewandten zylindrischen Vorsprung 38 in einem Lager 39 in Form eines Nadellagers gelagert. Am axialen Ende des zylindrischen Vorsprungs 38 befindet sich eine Wirkfläche 40 in Form einer Radialfläche, die an einer Metallscheibe 37 anschlagen kann, die ein axiales Gleitlager bildet. Die Metallscheibe 37 ist von einem elastischen Element 36 in Form einer Gummischeibe gefolgt. Daran schließt sich ein Sensor 34 in Form eines FSR-Foliendrucksensors an. Der Sensor 34 liefert ein analoges Ausgangssignal, das von der auf den Sensor 34 ausgeübten Kraft abhängt. Das elastische Element 36 in Form der Gummischeibe zwischen der Metallplatte 37 und dem Sensor 34 bewirkt hierbei einerseits eine gleichmäßige Verteilung der Kraft auf die Sensorfläche und andererseits eine Abdichtung des fettgefüllten Getriebegehäuses gegen das sich anschließende Motorgehäuse (in Fig. 2 und 3 nicht dargestellt).

Bei einem FSR-Sensor handelt es sich um einen sog. "Force Sensitive Sensor", also um einen kraftempfindlichen Sensor. Ein solcher Sensor weist i.d.R. drei Lagen auf, zwei Trägerfolien aus Polyester oder Polyimid, einmal mit aufgedruckter Halbleiter-Polymerschicht, die ihren Widerstand bei Druck verringert, und der anderen Deckschicht mit innenliegenden Metallelektroden, dünnen Leiterbahnen wie auf einer Leiterplatte. Beide Folien können etwa mit einer ringförmigen Klebeschicht verbunden sein, die Teile zusammen hält. Die gesamte Anordnung ist z.B. etwa nur 0,5 mm stark und weist keinen praktisch messbaren Betätigungsweg auf. FSR-Sensoren reagieren nicht auf Kraft, sondern auf Druck, d.h. auf Kraft pro Fläche. Man kann sich als Ersatzschaltung eine Parallelschaltung sehr vieler Widerstände vorstellen, die über die wirksame Fläche (Bereich mit Halbleiterschicht und Elektroden) gleichmäßig verteilt sind und auf Kraft reagieren. Wirkt nun eine geringere Kraft nur auf eine kleine Fläche, so dass dort großer Druck herrscht, dann wird der Widerstand dort niederohmig, und mit ihm die gesamte Parallelschaltung, weil der Gesamtwiderstand stets geringer als der kleinste Widerstand ist. Der ganze Strom kann dann über den kleinen Bereich fließen und stellt eine starke Belastung dar. Die Beaufschlagung muss also so erfolgen, dass sich die Kraft gleichmäßig auf die Fläche verteilt, bzw. nicht auf eine zu kleine Fläche konzentriert.

Der insgesamt mit 22 bezeichnete Antrieb umfasst einen Motor in Form eines BLDC-Motors (vgl. Ziffer 52 gemäß Fig. 5), dessen Motorwelle ein Antriebsritzel 23 antreibt, das über eine entsprechende Schrägverzahnung mit der Schrägverzahnung 25 des Antriebsrads 24 kämmt.

Die Schaltung des Schraubers 10 ist vereinfacht in Fig. 5 dargestellt. Eine zentrale Steuerung 50 in Form einer Mikroprozessorsteuerung ist mit einer etwa von einem Akkumulator gelieferten Versorgungsspannung 58 verbunden. Die Steuerung 50 regelt den Betrieb des Schraubers 10. Der Motor 52 wird von der Steuerung 50 angesteuert und kann in seiner Drehzahl über ein Potentiometer 62 geregelt werden. Von der Schalttaste 14 am Pistolenhandgriff 13 kann das Potentiometer 62 (sogenannter Gasgebeschalter) betätigt werden, um die Motordrehzahl zu regeln. Das Ausgangssignal des Sensors 34 liegt an einem Vergleicher 54 in Form eines Schmitt-Triggers, über den das Erreichen bestimmter Schaltpegel erfasst werden kann. Vom Ausgang des Vergleichers 54 wird der mit 60 bezeichnete Motorschalter betätigt. Zur Umschaltung zwischen Links- und Rechts-lauf dient ein Schalter 56 (in Fig. 1 nur an der Schalttaste mit 56 angedeutet). Ferner kann in einer alternativen Ausgestaltung noch ein Motorstromsensor 64 vorgesehen sein, der mit der Steuerung 50 gekoppelt ist, um eine motorstromabhängige Abschaltung in einer anderen Betriebsart zu erlauben, wie nachfol-gend noch beschrieben wird.

Der Aufbau der Koppeleinrichtung 26 zwischen Antriebsrad 24 und Werkzeugspindel, 30 ist aus Fig. 4 ersichtlich.

Am Antriebsrad 24 ist eine zylindrische Mantelfläche 41 vorgesehen, in der sich einander gegenüberliegend zwei schräg verlaufende Taschen 46 befinden. Die Taschen 46 sind gegenüber der Axialrichtung um einen bestimmten Winkel (in der Regel spitzer Winkel, je nach Kraftverhältnis kleiner 30°) angeordnet. In den einander gegenüberliegenden Taschen 46 sind zwei Kugellager 27, 28 verschieblich aufgenommen, durch die sich ein Querstift 29 erstreckt, der eine drehfeste Verbindung mit der Werkzeugspindel 30 gewährleistet.

Die Wirkungsweise des Schraubers 10 wird nunmehr anhand der Fig. 2 und 3 näher erläutert. Zunächst sei der Betrieb mit Tiefenanschlag gezeigt.

Gemäß Fig. 2 befindet sich der Schrauber 10 in seiner Ausschaltstellung. Da die Schrägverzahnung 25 nicht angetrieben ist und auch von der Werkzeugantriebswelle 30 keine Kraft auf das Antriebsrad 24 übertragen wird, ist der Sensor 34 praktisch drucklos. Das vom Vergleicher 34 erfasste Sensorsignal liegt somit unterhalb einer vorgegebenen Einschaltschwelle, die überschritten werden muss, um ein Anlaufen des Motors 52 zu erlauben.

Wird nun der Schrauber mit seinem Schraubwerkzeug 20 auf eine anzuziehende Schraube aufgesetzt, so drückt der Benutzer über den Pistolengriff 13 gegen die anzuziehende Schraube, so dass sich eine Anpresskraft ergibt, die über die Werkzeugspindel 30 und die Koppeleinrichtung 26 auf das Antriebsrad 24 übertragen wird. Die Wirkfläche 40 des Antriebsrads 24 drückt so über die Metallplatte 37 und das elastische Element 36 auf den Sensor 34. Sobald die Kraft auf den Sensor 34 einen vorbestimmten Anlaufschwellwert überschreitet, geht die Steuerung 50 in einen Einschaltzustand über, so dass bei zusätzlicher Betätigung des Motorschalters 60 der Motor 52 betätigt wird und somit das Antriebsrad 24 über das Antriebsritzel 23 vom Antrieb 22 angetrieben wird.

Beim Einschrauben läuft die Werkzeugspindel 30 rechtsinnig. Dabei entsteht durch das auf das Antriebsrad 26 übertragene Drehmoment in der Schrägverzahnung 25 eine Axialkraft, die das Antriebsrad 24 nach außen in Richtung auf die Werkzeugaufnahme 32 drücken will. Diese ist in ihrer Größe berechenbar und so ausgelegt, dass zum Fortführen des Schraubvorgangs mit steigendem Drehmoment der Bediener stärker drücken muss, weil sonst die Kraft auf den Sensor 34 unter eine Ausschaltschwelle abfällt. Die Anpresskraft auf die Schraube, die zum Verhindern eines Überspringens des Werkzeugs 20 nötig ist, wird zum Großteil durch die Axialkraft kompensiert, die durch die Schrägverzahnung 25 auf das Antriebsrad 24 ausgeübt wird.

Durch die Koppeleinrichtung 26 gemäß Fig. 4 wird das Drehmoment vom Antriebsrad 24 auf die Werkzeugspindel 30 übertragen. Das Drehmoment wird als Umfangskraft in den Taschen 46 des Antriebsrades 24 radial auf die Kugellager 27, 28 übertragen, die über den Querstift 29 mit der Werkzeugspindel 30 verbunden sind. In Abhängigkeit von der Steigung der Taschen 27, 28 entsteht eine Axialkraft, die die Werkzeugspindel 30 beim Schraubvorgang im Rechtslauf nach außen drücken will. Diese Axialkraft ist ebenso wie die von der Schrägverzahnung 25 ausgeübte Axialkraft proportional zum Drehmoment, aber stets etwas geringer als diese, was für die Abschaltung wichtig ist.

Solange die vom Bediener ausgeübte Axialkraft größer als die Zahn-rad-Axialkraft plus der Rückstellkraft des Sensors 34 ist, bleiben das Antriebsrad 24 und die Werkzeugspindel 30 in ihrer hintersten Stellung gemäß Fig. 3, die mit 10' bezeichnet ist.

Der Schrauber 10 kann jederzeit durch Loslassen der Schalttaste 14 angehalten werden. Der Schrauber 10 bleibt gleichfalls stehen, wenn die Anpresskraft auf die Werkzeugspindel 30, die vom Bediener ausgeübt werden muss, so weit nachlässt, dass die Ausschaltschwelle des Sensors 34 unterschritten wird. Das kann zum Beispiel der Fall sein, wenn der Bediener absichtlich oder unabsichtlich schwächer drückt, oder aber, was den eigentlichen Verwendungszweck des Schraubers 10 darstellt, wenn der Tiefenanschlag 18 auf dem Werkstück aufsitzt und die Bedieneranpresskraft aufnimmt.

Die vom Antriebsrad 24 ausgeübte Axialkraft drückt dann das Antriebsrad 24 nach außen, so dass es an einer Anlauffläche 35 des Gehäuses 12 anschlägt und somit den Sensor 34 entlastet. Somit wird die Ausschaltschwelle des Motors 52 unterschritten und der Motor abgeschaltet. Zwecks einer schnelleren Abbremsung kann er zusätzlich in grundsätzlicher bekannter Weise automatisch in einen selbsterregten oder fremderregten Bremsbetrieb umgeschaltet werden.

Nach dem Ausschalten läuft der Antrieb 22 infolge seiner Trägheit weiter und dreht dabei die Schraube noch etwas weiter ein. Weil dabei das Schraub-werkzeug 20 noch nachgeführt werden muss, der Schrauber aber auf dem Tiefenanschlag 18 aufsitzt und die Bewegung selbst nicht nachvollziehen kann, muss die Werkzeugspindel 30 die Axialbewegung machen, was durch die Koppeleinrichtung 26 ermöglicht wird. Die Axialkraft, die durch die schräge Anordnung der Taschen 46 entsteht, sollte so groß wie möglich sein, um das Werkzeug 20 dabei drehmomentabhängig auf den Schraubenkopf drücken zu können, muss jedoch kleiner als die vom Antriebsrad 24 ausgeübte Axialkraft sein, damit das Antriebsrad 24 in seiner äußeren, dem Ausschaltzustand des Motors 52 bewirkenden Stellung verbleibt.

Die Schalttaste 14 kann weiter gedrückt bleiben. Der Schrauber 10, bzw. 10' läuft erst wieder an, wenn wieder eine genügend große Kraft auf die Werk-zeugspindel 30 ausgeübt wird, zum Beispiel beim Ansetzen der nächsten Schraube.

Die Einschraubtiefe kann am Tiefenanschlag 18 zuvor durch Verstellen des Einstellrings 19 über ein Gewinde an der Hülse 17 eingestellt werden.

Zusätzlich könnte beispielsweise eine Feder vorgesehen sein, durch die das Antriebsrad 24 in eine Stellung nach außen gegen die Anschlagfläche 35 des Gehäuses 12 vorgespannt wird (nicht dargestellt). Bei einer nicht klar definierten Kennlinie des Sensors 34, die von Sensor zu Sensor abweichen kann, wird hierdurch eine serientaugliche Einstellung der Einschaltschwelle und der Ausschaltschwelle erleichtert. Allerdings wird hierbei gleichzeitig die Hysterese zwischen Ein- und Ausschaltschwelle etwas verkleinert.

Die kraftsensitive Steuerung des Motors 52 kann grundsätzlich auch genutzt werden, ohne dass der Tiefenanschlag 18 aufgesetzt ist. Sobald der Bediener in der Endphase der Verschraubung in seiner Anpresskraft soweit nachlässt, dass die vom Antriebsrad 24 ausgeübte Axialkraft kleiner wird als die vom Antriebsrad 24 ausgeübte Axialkraft zuzüglich der Sensorkraft, so bewegt sich das Antriebsrad 24 nach außen, so dass der Sensor 34 entlastet wird und eine Abschaltung erfolgt.

Auf den Motorschalter 60 könnte grundsätzlich auch verzichtet werden. Ein Anlaufen des Motors 52 erfolgt dann, wenn die auf den Sensor 34 ausgeübte Axialkraft die Einschaltschwelle überschreitet.

Gemäß einer weiteren Variante der Erfindung könnte eine Abschaltung des Motors auch so realisiert werden, dass der Motor abgeschaltet wird, sobald ein Motorstromsensor 64 einen vorgegebenen Schwellwert überschreitet. Da der Motor 52 ferner abgeschaltet wird, sobald das Sensorsignal unterhalb des Halte-schwellwertes abfällt, ergibt sich eine Ausschaltung des Motors 52 dann, wenn die Anpresskraft beim Anziehen der Verschraubung nachlässt. Hierbei könnte ferner die Sollwert für die Abschaltung über den Motorstromsensor 64 innerhalb eines gewissen Bereiches von der auf dem Sensor 34 ausgeübten Axialkraft abhängig gemacht werden. Im Ergebnis könnte also eine spätere Abschaltung bei einem höheren Anzugsmoment der Verschraubung erzielt werden, wenn eine höhere Anpresskraft ausgeübt wird und umgekehrt.

## Patentansprüche

1. Schrauber mit einem Antriebsrad (24), das mittels eines Antriebs (22) antreibbar ist, mit einer Werkzeugspindel (30) mit einer Werkzeugaufnahme (32) für ein Schraubwerkzeug (20), mit einem Sensor (34) zur Überwachung der Werkzeugspindel (30), und mit einer Steuerung (50) zur Steuerung des Antriebs (22) in Abhängigkeit von einem Ausgangssignal des Sensors (34), wobei der Sensor (34) als Kraftsensor ausgebildet ist, der mit der Steuerung (50) derart gekoppelt ist, dass diese in einen Ausschaltzustand geht, wenn die Anpresskraft auf den Sensor (34) unterhalb eines bestimmten Halteschwellwertes abfällt, **dadurch gekennzeichnet, dass** die Leistung des Antriebs (22) für einen kurzen Zeitraum gegenüber der Nennleistung erhöht wird, wenn die Anpresskraft auf den Sensor (34) oberhalb eines bestimmten Maximalschwellwertes liegt.

2. Schrauber nach Anspruch 1, **dadurch gekennzeichnet, dass** die Werkzeugspindel, (30) mit dem Antriebsrad (24) über eine Koppeleinrichtung (26) gekoppelt ist, die bei der Übertragung eines Drehmomentes auf die Werkzeugspindel (30) eine axiale Kraftkomponente erzeugt.

3. Schrauber nach Anspruch 1 oder 2, **dadurch gekennzeichnet, dass** die Koppeleinrichtung (26) derart ausgebildet ist, dass bei Antrieb der Werkzeugspindel (30) im Rechtslauf eine axiale Kraftkomponente nach außen in Richtung der Werkzeugaufnahme (32) erzeugt wird.

4. Schrauber nach einem der vorhergehenden Ansprüche, **dadurch gekennzeichnet, dass** der Sensor (34) derart mit der Steuerung (50) gekoppelt ist, dass sich dann, wenn die auf den Sensor (34) ausgeübte Anpresskraft oberhalb eines bestimmten Anlaufschwellwertes liegt, ein Einschaltzustand ergibt, in dem ein Motor (52) zur Betätigung des Antriebs (22) aktivierbar ist.

5. Schrauber nach einem der vorhergehenden Ansprüche, **dadurch gekennzeichnet, dass** der Sensor (34) derart mit der Steuerung (50) gekoppelt ist, dass der Antrieb (22) anläuft, wenn die Anpresskraft auf den Sensor (34) oberhalb eines bestimmten Anlaufschwellwertes liegt und ein Motorschalter (60) betätigt wird.

6. Schrauber nach einem der vorhergehenden Ansprüche, **dadurch gekennzeichnet, dass** die Leistung des Antriebs (22), insbesondere die Drehzahl oder das Drehmoment, in Abhängigkeit von der Anpresskraft auf den Sensor (34) gesteuert wird.

7. Schrauber nach einem der vorhergehenden Ansprüche, **gekennzeichnet durch** einen vorzugsweise verstellbaren Tiefenanschlag (18).

8. Schrauber nach einem der vorhergehenden Ansprüche, **dadurch gekennzeichnet, dass** die Koppeleinrichtung (26) am Antriebsrad (24) schräg zur Axialrichtung verlaufende Taschen (46) aufweist, in die in den Taschen verschiebliche Eingriffsmittel (27, 28, 29) eingreifen, die mit der Werkzeugspindel (30) drehfest verbunden sind.

9. Schrauber nach Anspruch 8, **dadurch gekennzeichnet, dass** in den Taschen (46) Kugellager (27, 28) gehalten sind, in denen ein Querstift (29) aufgenommen ist, der die Werkzeugspindel (30) durchsetzt.

10. Schrauber nach einem der vorhergehenden Ansprüche, **dadurch gekennzeichnet, dass** am Antriebsrad (24) eine Schrägverzahnung (25) vorgesehen ist, die mittels eines entsprechend verzahnten Zahnrades (23) des Antriebs (22) antreibbar ist, wobei die Schrägverzahnung (25) vorzugsweise derart ausgebildet ist, dass bei Antrieb der Antriebsrades (24) im Rechtslauf eine axiale Kraftkomponente in Richtung auf die Werkzeugspindel (30) erzeugt wird.

11. Schrauber nach einem der vorhergehenden Ansprüche, **dadurch gekennzeichnet, dass** die Werkzeugspindel (30) mittels der Koppeleinrichtung (26) gegenüber dem Antriebsrad (24) axial beweglich aufgenommen ist.

12. Schrauber nach einem der vorhergehenden Ansprüche, **dadurch gekennzeichnet, dass** das Antriebsrad (24) eine Wirkfläche (40) aufweist, die vorzugsweise über ein elastisches Element (36) auf den Sensor (34) wirkt, wobei das elastische Element (36) vorzugsweise als Gummischeibe ausgebildet ist.

13. Schrauber nach einem der vorhergehenden Ansprüche, **dadurch gekennzeichnet, dass** der Sensor (34) als Flächensensor, insbesondere als Foliensensor, ausgebildet ist.

14. Schrauber nach einem der vorhergehenden Ansprüche, **dadurch gekennzeichnet, dass** die Werkzeugspindel (30) durch eine Feder in Richtung nach außen vorgespannt ist.

## Claims

1. Screwdriver comprising a drive wheel (24), which can be driven by means of a drive (22), with a tool spindle (30) having a tool mount (32) for a screwdriver (20), with a sensor (34) for monitoring the tool spindle (30), and with a control (50) for controlling the drive (22) as a function of an output signal of the sensor (34), wherein the sensor (34) is designed as a force sensor which is coupled to the control (50) such that the latter enters an off-state when the pressing force on the sensor (34) falls below a specific holding threshold, **characterised in that** the power of the drive (22) is increased for a short period relative to the nominal power when the pressing force on the sensor (34) is above a specific maximum threshold.

2. Screwdriver according to claim 1, **characterised in that** the tool spindle (30) is coupled to the drive wheel (24) via a coupling device (26), which produces an axial force component when transmitting torque to the tool spindle (30).

3. Screwdriver according to claim 1 or 2, **characterised in that** the coupling device (26) is designed such that when driving the tool spindle (30) clockwise an axial force component is produced outwards in the direction of the tool mount (32).

4. Screwdriver according to any of the preceding claims, **characterised in that** the sensor (34) is coupled to the control (50) such that when the pressing force exerted on the sensor (34) is above a specific start-up level a switch-on state is achieved in which a motor (52) can be activated for activating the drive (22).

5. Screwdriver according to any of the preceding claims, **characterised in that** the sensor (34) is coupled to the control (50) such that the drive (22) starts up when the pressing force on the sensor (34) is above a specific start-up level and a motor switch (60) is activated.

6. Screwdriver according to any of the preceding claims, **characterised in that** the power of the drive (22), in particular the speed or the torque, is controlled as a function of the pressing force on the sensor (34).

7. Screwdriver according to any of the preceding claims, **characterised by** a preferably adjustable depth stop (18).

8. Screwdriver according to any of the preceding claims, **characterised in that** the coupling device (26) on the drive wheel (24) comprises pockets (46) running diagonally to the axial direction, into which engagement means (27, 28, 29) that are slidable into the pockets engage, which are connected in a rotationally secure manner to the tool spindle (30).

9. Screwdriver according to claim 8, **characterised in that** ball bearings (27, 28) are held in the pockets (46) in which a transverse pin (29) is mounted which passes through the tool spindle (30).

10. Screwdriver according to any of the preceding claims, **characterised in that** on the drive wheel (24) a helical gearing (25) is provided, which can be driven by means of a correspondingly toothed gear (23) of the drive (22), wherein the helical gearing (25) is preferably designed such that when driving the drive wheel (24) clockwise an axial force component is produced in the direction of the tool spindle (30).

11. Screwdriver according to any of the preceding claims, **characterised in that** the tool spindle (30) is mounted to be axially movable relative to the drive wheel (24) by means of the coupling device (26).

12. Screwdriver according to any of the preceding claims, **characterised in that** the drive wheel (24) comprises an active area (40) which preferably acts via an elastic element (36) on the sensor (34), wherein the elastic element (36) is preferably designed as a rubber disc.

13. Screwdriver according to any of the preceding claims, **characterised in that** the sensor (34) is designed as a surface sensor, in particular as a film sensor.

14. Screwdriver according to any of the preceding claims, **characterised in that** the tool spindle (30) is pretensioned by a spring in the outward direction.

## Revendications

1. Visseuse avec une roue d'entraînement (24), qui peut être entraînée au moyen d'un entraînement (22), avec une broche d'outil (30) avec un logement d'outil (32) pour un outil de vissage (20), avec un capteur (34) pour la surveillance de la broche d'outil (30), et avec une commande (50) pour la commande de l'entraînement (22) en fonction d'un signal de sortie du capteur (34), dans laquelle le capteur (34) est réalisé en tant que capteur de force, qui est couplé à la commande (50) de telle sorte que celle-ci passe à un état de mise hors service, lorsque la force de pression sur le capteur (34) descend en dessous d'une valeur seuil d'arrêt déterminée, **caractérisée en ce que** la puissance de l'entraînement (22) est augmentée pendant une courte période par rapport à la puissance nominale, lorsque la force de pression sur le capteur (34) se situe au-dessus d'une valeur seuil maximale déterminée.

2. Visseuse selon la revendication 1, **caractérisée en ce que** la broche d'outil (30) est couplée à la roue d'entraînement (24) par le biais d'un dispositif de couplage (26), qui génère une composante de force axiale lors de la transmission d'un couple sur la broche d'outil (30).

3. Visseuse selon la revendication 1 ou 2, **caractérisée en ce que** le dispositif de couplage (26) est réalisé de telle sorte que lors de l'entraînement de la broche d'outil (30) vers la droite, une composante de force axiale est générée vers l'extérieur en direction du logement d'outil (32).

4. Visseuse selon l'une quelconque des revendications précédentes, **caractérisée en ce que** le capteur (34) est couplé à la commande (50) de telle sorte qu'il résulte alors un état de mise en service, lorsque la force de pression exercée sur le capteur (34) se situe au-dessus d'une valeur seuil de démarrage déterminée, dans lequel un moteur (52) peut être activé pour l'actionnement de l'entraînement (22).

5. Visseuse selon l'une quelconque des revendications précédentes, **caractérisée en ce que** le capteur (34) est couplé à la commande (50) de telle sorte que l'entraînement (22) démarre, lorsque la force de pression sur le capteur (34) se situe au-dessus d'une valeur seuil de démarrage déterminée et un interrupteur de moteur (60) est actionné.

6. Visseuse selon l'une quelconque des revendications précédentes, **caractérisée en ce que** la puissance de l'entraînement (22), en particulier la vitesse de rotation ou le couple, est commandée en fonction de la force de pression sur le capteur (34).

7. Visseuse selon l'une quelconque des revendications précédentes, **caractérisée par** une butée de profondeur de préférence réglable (18).

8. Visseuse selon l'une quelconque des revendications précédentes, **caractérisée en ce que** le dispositif de couplage (26) présente au niveau de la roue d'entraînement (24) des poches (46) s'étendant en biais par rapport à la direction axiale, dans lesquelles des moyens de mise en prise (27, 28, 29) mobiles dans les poches sont mis en prises, qui sont reliés solidaires en rotation à l'arbre de broche (30).

9. Visseuse selon la revendication 8, **caractérisée en ce que** des roulements à billes (27, 28) sont retenus dans les poches (46), dans lesquels une tige transversale (29) est reçue, qui traverse la broche d'outil (30).

10. Visseuse selon l'une quelconque des revendications précédentes, **caractérisée en ce qu'**une denture hélicoïdale (25), qui peut être entraînée au moyen d'une roue dentée (23) à denture correspondante de l'entraînement (22), est prévue au niveau de la roue d'entraînement (24), dans laquelle la denture hélicoïdale (25) est réalisée de préférence de telle sorte que lors de l'entraînement de la roue d'entraînement (24) vers la droite, une composante de force axiale est générée en direction de la broche d'outil (30).

11. Visseuse selon l'une quelconque des revendications précédentes, **caractérisée en ce que** la broche d'outil (30) est reçue de manière axialement mobile par rapport à la roue d'entraînement (24) au moyen du dispositif de couplage (26).

12. Visseuse selon l'une quelconque des revendications précédentes, **caractérisée en ce que** la roue d'entraînement (24) présente une surface utile (40), qui agit de préférence par le biais d'un élément élastique (36) sur le ressort (34), dans laquelle l'élément élastique (36) est réalisé de préférence en tant que rondelle en caoutchouc.

13. Visseuse selon l'une quelconque des revendications précédentes, **caractérisée en ce que** le capteur (34) est réalisé en tant que capteur de surface, en particulier en tant que capteur de film.

14. Visseuse selon l'une quelconque des revendications précédentes, **caractérisée en ce que** la broche d'outil (30) est précontrainte par un ressort en direction vers l'extérieur.
